# FASCICULE DE BREVET EUROPEEN

(11) **EP 3 003 776 B1**
(45) Date de publication et mention de la délivrance du brevet: **07.06.2017**
(21) Numéro de dépôt: 14725216.7
(22) Date de dépôt: 14.04.2014
(51) Int. Cl.: B60N 2/225, B60N 2/235

(54) **ENSEMBLE D'ARTICULATION DEBRAYABLE POUR SIEGE DE VEHICULE AUTOMOBILE**
LÖSBARE SCHARNIERANORDNUNG FÜR EINEN KRAFTFAHRZEUGSITZ
RELEASABLE HINGE ASSEMBLY FOR A MOTOR VEHICLE SEAT

(30) Priorité: 30.05.2013 FR 1354958
(43) Date de publication de la demande: 13.04.2016
(73) Titulaire: Peugeot Citroën Automobiles SA, 78140 Vélizy Villacoublay (FR)
(72) Inventeur: HAYAT, David, F-78770 Auteuil (FR); PINTO TEIXEIRA, Frederic, F-91160 Ballainvilliers (FR); DUTOT, Christophe, F-94400 Vitry sur Seine (FR); FU, Chuanlang, 75013 Paris 13 (FR); TRANNOY, Marc, F-78370 Plaisir (FR); FEVRIER, Laurent, F-28410 Broue (FR)
(74) Mandataire: Jeannin, Laurent Jean-Pierre
(86) Numéro de dépôt international: PCT/FR2014/050905
(87) Numéro de publication internationale: WO 2014/191641

(56) Documents cités:
- DE-C1- 19 548 809
- DE-U1-202010 007 993

## Description

### Domaine de l'invention

La présente invention concerne d'une manière générale les ensembles d'articulation permettant de régler l'inclinaison entre le dossier et l'assise d'un siège de véhicule automobile, et vise en particulier ceux de type « continu » autorisant un réglage fin de cette inclinaison.

### Arrière-plan de l'invention

Un tel ensemble d'articulation « continu » qui est décrit par exemple dans la demande française FR 2 743 032, comporte classiquement :
- un premier flasque lié en rotation avec une denture intérieure présentant un premier axe ;
- un deuxième flasque lié en rotation avec une denture extérieure comportant un nombre de dents inférieur d'au moins une dent à celui de ladite denture intérieure, et présentant un deuxième axe parallèle et distant dudit premier axe ; lesdits premier et deuxième flasques étant prévus pour être fixés respectivement à l'assise et au dossier du siège ;
- un mécanisme à excentrique reliant lesdites dentures intérieure et extérieure, et
- un organe de commande pour faire tourner le mécanisme à excentrique et entrainer la rotation de la denture extérieure dans la denture intérieure de sorte à faire varier la position angulaire relative entre ladite assise et ledit dossier.

Ce type d'articulation qui autorise un réglage fin de l'angle d'inclinaison entre l'assise et le dossier du siège, présente toutefois l'inconvénient d'empêcher l'utilisateur de faire passer rapidement le dossier de sa position relevée vers une position rabattue permettant l'accès aux places arrière ou une mise en tablette du dossier.

On connaît également des ensembles d'articulation de type « discontinu » permettant de réaliser un tel basculement rapide du dossier.

Cependant, ces ensembles de type « discontinus » n'autorisent qu'un réglage angulaire grossier de l'orientation du dossier par rapport à l'assise, ce qui ne permet pas à l'utilisateur d'obtenir le même degré de confort que celui obtenu avec les ensembles de type « continu ».

### Objet et résumé de l'invention

La présente invention vise donc à proposer un ensemble d'articulation qui assure un réglage fin de l'angle d'inclinaison du dossier d'un siège de véhicule automobile par rapport à l'assise, tout en permettant également de faire varier de façon rapide cet angle d'inclinaison, notamment pour autoriser l'accès aux places arrière ou pour réaliser une mise en tablette de ce dossier.

Elle propose à cet effet, un ensemble d'articulation débrayable pour siège de véhicule automobile comportant :
- un premier flasque comprenant une denture intérieure centrée sur son axe ;
- un deuxième flasque présentant un axe parallèle et légèrement distant de l'axe dudit premier flasque, lesdits premier et deuxième flasques étant prévus pour être fixés respectivement à l'assise et au dossier du siège ou vice versa ;
- un mécanisme à excentrique reliant ladite denture intérieure à une denture extérieure centrée sur l'axe dudit deuxième flasque, et comportant un nombre de dents inférieur d'au moins une dent à celui de ladite denture intérieure,
- un organe de commande pour faire tourner ledit mécanisme à excentrique et entrainer la rotation de ladite denture extérieure dans ladite denture intérieure ;
ledit ensemble d'articulation étant caractérisé en ce que ladite denture extérieure est montée sur un pignon, et en ce qu'il comporte en outre un organe de débrayage actionnable en rotation et apte à entrainer des pions de verrouillage en translation axiale pour faire passer ledit ensemble d'articulation d'une configuration verrouillée dans laquelle lesdits pions sont introduits au moins partiellement dans des orifices de formes complémentaires ménagés dans la paroi dudit pignon de sorte à lier en rotation ladite denture extérieure et ledit deuxième flasque, à une configuration déverrouillée dans laquelle lesdits pions ne coopèrent pas avec lesdits orifices de sorte que ladite denture extérieure et ledit deuxième flasque sont désolidarisés en rotation l'un par rapport à l'autre.

Grâce à la présence de cet organe de débrayage qui permet d'établir ou de supprimer la liaison en rotation entre la denture extérieure et le deuxième flasque en commandant le déplacement axial de pions de verrouillage, l'ensemble d'articulation selon l'invention peut passer très facilement d'une configuration de type « continu » dans laquelle l'utilisateur peut effectuer un réglage fin de l'angle d'inclinaison entre l'assise et le dossier du siège, à une configuration de type « discontinue » dans laquelle les deux flasques peuvent tourner librement l'un autour de l'autre de sorte que l'utilisateur peut faire varier de façon rapide cet angle d'inclinaison, notamment pour autoriser l'accès aux places arrière ou pour réaliser une mise en tablette de ce dossier.

Selon des caractéristiques préférées de l'ensemble d'articulation, prises seules ou en combinaison :
- ledit organe de débrayage comporte des rampes coopérant avec les dits pions de sorte à entrainer leur translation axiale lors de la rotation dudit organe de débrayage ;
- ledit organe de débrayage comporte un moyeu cylindrique central et plusieurs bras en arc de cercle reliés audit moyeu par l'intermédiaire de pattes radiales angulairement réparties de manière régulière autour dudit deuxième flasque, chaque dit bras comportant une dite rampe coopérant avec un dit pion ;
- ledit ensemble d'articulation comporte des moyens élastiques de rappel sollicitant en permanence lesdits pions en direction des dits bras ;
- chaque dit bras présente une ouverture oblongue en arc de cercle recevant un dit pion respectif dont un épaulement repose sur la bordure de cette ouverture ;
- chaque dit bras comporte une portion proximale raccordée à une dite patte respective, une portion distale de plus faible épaisseur, et une portion intermédiaire reliant lesdites portions proximale et distale et formant une dite rampe ;
- chaque dit pion présente un alésage cylindrique axial et traversant, à l'intérieur duquel est montée à coulissement la tige cylindrique d'un piston de guidage respectif solidaire dudit deuxième flasque ;
- chaque dit pion comporte un téton d'extrémité prévu pour s'introduire dans un dit orifice de forme complémentaire ménagé dans la paroi dudit pignon ;
- l'un des dits pions présente un téton de forme différente prévu pour coopérer exclusivement avec certains des orifices ménagés dans la paroi dudit pignon et qui présentent une forme complémentaire à ce téton ; et/ou
- lesdits pions sont angulairement répartis de manière régulière par rapport à l'axe dudit deuxième flasque, le nombre d'orifices étant en outre égal à un multiple du nombre de pions.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue éclatée en perspective de trois quart avant des éléments constitutifs de ensemble d'articulation selon l'invention ;
- la figure 2 représente une vue éclatée en perspective de trois quart arrière des éléments constitutifs de l'ensemble d'articulation ;
- la figure 3 représente une vue en perspective suivant un autre angle de l'ensemble d'articulation selon l'invention dans sa configuration verrouillée, les deux flasques et l'organe de commande excentrique ayant été volontairement omis pour une meilleure compréhension de l'invention ;
- la figure 4 est une vue semblable à la figure 3 mais dans laquelle l'ensemble d'articulation selon l'invention occupe sa configuration déverrouillée ;
- la figure 5 est une vue en perspective du flasque à l'intérieur duquel est emprisonné l'organe de débrayage ; et
- la figure 6 est une vie en perspective de l'un des pions de verrouillage.

### Description détaillée d'un mode de réalisation

L'ensemble d'articulation 1 représenté sur les figures est intégré dans un siège de véhicule automobile (non illustré) et permet de régler l'inclinaison relative entre le dossier et l'assise de ce siège.

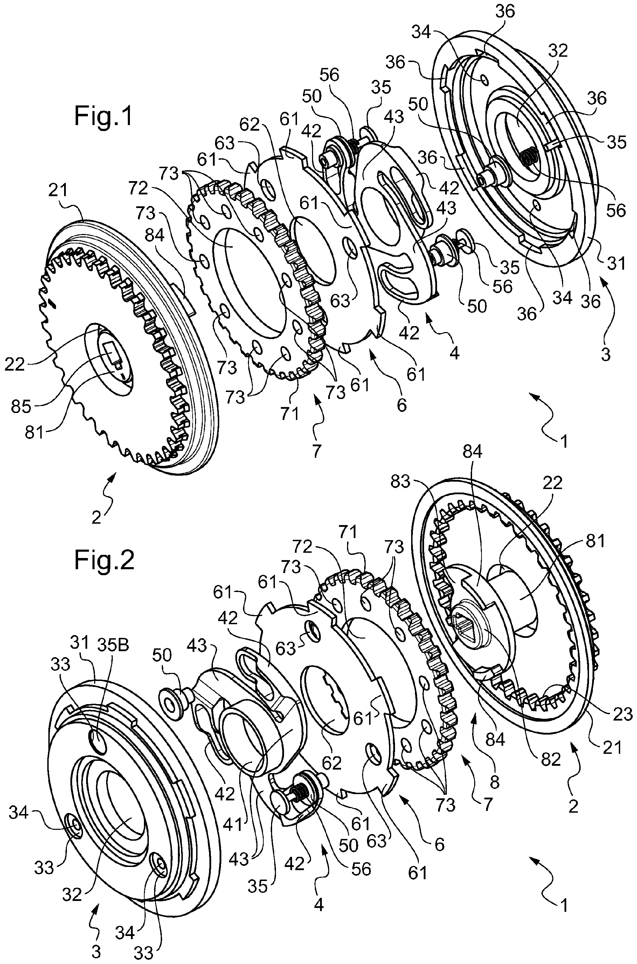

Comme illustré sur les figures 1 et 2, l'ensemble d'articulation 1 comporte un premier flasque 2 et un deuxième flasque 3 fixés respectivement au dossier et à l'assise du siège ou vice versa, de préférence par soudage.

Les rebords périphériques 21, 31 des deux flasques 2 et 3 sont maintenus accolés l'un à l'autre par l'intermédiaire d'une bague annulaire de maintien non représentée sur les figures.

Chaque flasque 2, 3 présente une ouverture centrale respective 22, 32 qui présente une forme circulaire.

Le flasque 2 présente en face interne une denture intérieure 23 centrée sur son axe.

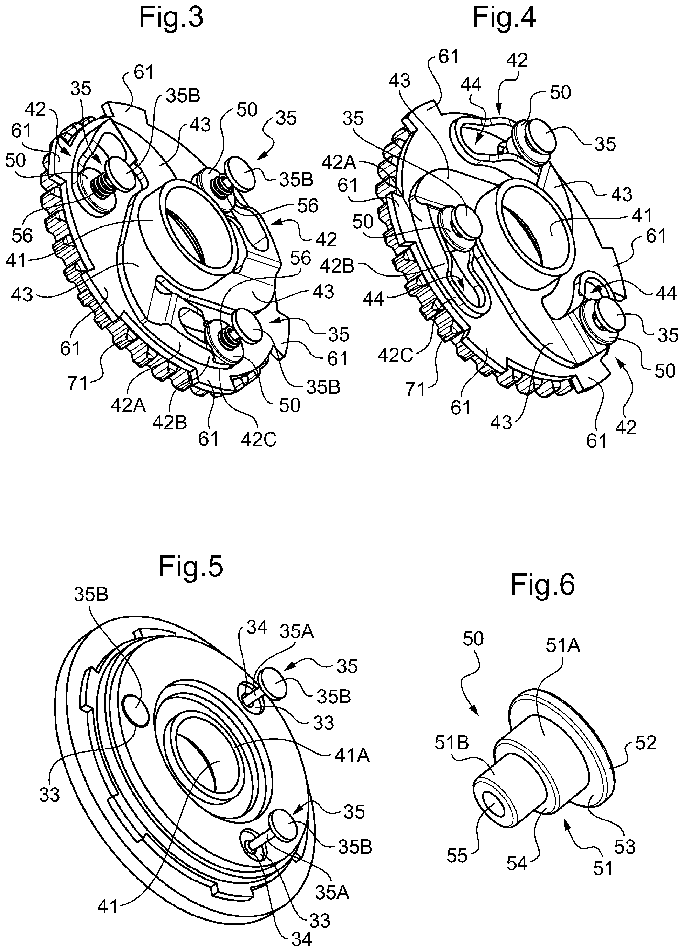

Le flasque 3, mieux visible sur la figure 5, présente un axe parallèle et légèrement distant de celui du flasque 2. Ce flasque 3 comprend, en face externe, trois lamages circulaires 33 angulairement répartis de manière régulière autour de son axe.

Un perçage respectif débouchant 34 s'étend parallèlement à l'axe du flasque 3 depuis le centre de chaque lamage 33 jusqu'à la face interne de ce flasque 3.

Chacun des perçages 34 est traversé par la tige cylindrique 35A d'un piston de guidage respectif 35 dont la tête circulaire plate 35B est emboitée à force dans un lamage correspondant 33, de sorte qu'elle ne dépasse pas de la face externe du flasque 3.

Les deux flasques 2, 3 délimitent un espace à l'intérieur duquel sont positionnés un organe de débrayage 4, un disque de fermeture 6, un pignon 7, un mécanisme à excentrique (non représenté par soucis de simplification des figures), et un organe de commande excentrique 8.

L'organe de débrayage 4, mieux visible sur les figures 3 et 4, comporte un moyeu cylindrique central 41 traversant l'ouverture 32 du flasque 3 et trois bras en arc de cercle 42.

Ces bras 42 sont reliés au moyeu 41 par l'intermédiaire de trois pattes 43 angulairement réparties de manière régulière autour de l'axe de ce moyeu 41 (qui se confond avec l'axe du flasque 3) et s'étendant radialement depuis son extrémité axiale située en regard du disque de fermeture 6.

L'extrémité 41A du moyeu central 41 qui saille du flasque 3 (figure 5), est reliée mécaniquement à une molette de commande (non représentée sur les figures) dont la rotation entraine celle de l'organe de débrayage 4.

Chaque bras 42 comporte une portion proximale 42A raccordée à une patte respective 43, une portion distale 42C de plus faible épaisseur, et une portion intermédiaire 42B formant une rampe reliant les portions proximale 42A et distale 42C. Chacun des bras 42 présente en outre, sur l'ensemble de sa longueur, une ouverture oblongue 44 en arc de cercle recevant un pion de verrouillage 50 respectif.

Chaque pion 50 comporte un corps 51 surplombant une embase 52 en forme de disque (figure 6).

Le corps 51 est constitué par un arbre cylindrique 51A s'étendant depuis l'embase 52 et qui se prolonge par un téton d'extrémité cylindrique 51B, coaxial avec cet arbre 51A et de plus petit diamètre.

Chaque pion 50 présente ainsi deux épaulements 53, 54 transversaux sensiblement perpendiculaires à son axe et reliant respectivement l'embase 52 à l'arbre 51A, et cet arbre 51A au téton 51B.

Comme illustré par les figures 3 et 4, chaque épaulement 53 repose sur la bordure de l'ouverture oblongue 44 d'un bras 42 respectif, de sorte à retenir le pion 50 correspondant. Le diamètre des arbres 51A est très légèrement inférieur à la largeur des ouvertures oblongues 44, de sorte que les pions 50 peuvent coulisser le long de ces ouvertures 44 sans mouvement radial parasite.

Les trois pions 50 qui sont angulairement répartis de manière régulière autour de l'axe du flasque 3, présentent chacun un alésage cylindrique axial et traversant 55 (figure 6), à l'intérieur duquel est montée à coulissement la tige cylindrique 35A d'un piston de guidage respectif 35, un ressort hélicoïdal 56 étant par ailleurs disposé autour de chaque tige 35A entre l'embase 52 d'un pion 50 et la face interne du flasque 3, de sorte à solliciter en permanence le pion 50 en direction des bras 42 (figure 3).

Le disque de fermeture 6 est lié mécaniquement avec le flasque 3 sur lequel il est emboité à force.

Plus précisément, ce disque 6 qui comporte six excroissances périphériques radiales 61 angulairement réparties de manière régulière autour de l'axe du flasque 3, est emboité à force sur le côté interne du flasque 3 au niveau de sa zone périphérique avec les six excroissances 61 qui coopèrent avec six empreintes correspondantes 36 situées sur la face interne de ce flasque 3.

L'organe de débrayage 4, pris en sandwich entre le flasque 3 et le disque 6, est donc empêché de se mouvoir axialement.

Le disque 6 présente une ouverture centrale circulaire 62 de même diamètre que l'ouverture 32 du flasque 3, et axée sur l'axe de ce flasque 3.

Ce disque 6 présente également trois ouvertures circulaires 63 angulairement répartis de manière régulière autour de l'axe du flasque 3. Ces ouvertures présentent un diamètre légèrement supérieur à celui des arbres 51A des pions 50, chacune d'entre elles étant en outre alignée sur l'axe d'un pion 50 respectif.

Le pignon 7 qui est positionné contre le disque de fermeture 6, comporte une denture extérieure 71 et une ouverture centrale 72 qui sont centrées sur l'axe du flasque 3.

La denture extérieure 71 qui comporte un nombre de dents inférieur d'au moins une dent à celui de la denture intérieure 23 du flasque 2, est engrainée avec cette dernière.

La paroi du pignon 7 présente neuf orifices circulaires 73 angulairement répartis de manière régulière autour de l'axe du flasque 3 dont le diamètre est très légèrement supérieur à celui des tétons 51B des pions 50.

Un mécanisme à excentrique connu en soi et non représenté sur les figures par soucis de simplification, est disposé à l'intérieur de l'ouverture centrale 72 pratiquée dans le pignon 7.

L'organe de commande excentrique 8 de ce mécanisme est réalisé d'une seule pièce et comprend deux moyeux cylindriques 81, 82 s'étendant de part et d'autre d'un disque échancré 83 présentant des doigts d'entrainement 84 faisant axialement saillie en direction du pignon 7.

Les moyeux cylindriques 81, 82 sont centrés respectivement sur l'axe du premier flasque 2 et sur celui du deuxième flasque 3.

D'autre part, le premier moyeu cylindrique 81 est reçu à l'intérieur de l'ouverture 22 du premier flasque 2 tandis que le second moyeu cylindrique 82 est reçu à l'intérieur de l'ouverture 72 centrale du pignon 7.

Le premier moyeu 81 présente également un évidement central 85 prévu pour la réception d'une tige d'entrainement reliée à une seconde molette de commande.

L'actionnement en rotation de cette seconde molette entraine la transmission d'un couple à l'organe de commande excentrique 8 qui va faire tourner le mécanisme à excentrique et provoquer un mouvement excentré du pignon 7 par rapport à la denture intérieure 23 du flasque 2.

On va maintenant décrire rapidement le fonctionnement de l'ensemble d'articulation 1 selon l'invention.

Cet ensemble d'articulation présente une première configuration de verrouillage dans laquelle le flasque 3, le disque de fermeture 6 et le pignon 7 sont tous solidaires en rotation.

Dans cette configuration, l'épaulement 53 de chaque pion de verrouillage 50 repose sur la bordure de l'ouverture oblongue 44 d'un bras correspondant 42, au niveau de sa portion distale 42C de plus faible épaisseur. De fait, une partie du corps 51 du pion saille axialement du bras 42 en traversant une ouverture respective 63 du disque de fermeture 6, avec son téton 51B qui est reçu à l'intérieur d'un orifice correspondant 73 du pignon 7,

Dans cette configuration de verrouillage, lorsqu'un couple de rotation est transmis à l'organe de commande excentrique 8 via la seconde molette de commande, les deux flasques 2 et 3 pivotent l'un par rapport à l'autre de manière continue, ce qui permet de régler précisément l'inclinaison du dossier par rapport à l'assise du siège.

Lorsque l'utilisateur actionne en rotation la première molette de commande reliée mécaniquement à l'organe de débrayage 4, ce dernier est entrainé en rotation autour de l'axe du flasque 3.

La rotation de cet organe de débrayage 4 (et donc des bras 42) provoque, de par la coopération des rampes 42B avec les épaulements 53, une translation axiale des pions de verrouillage 50 en direction du flasque 3 ainsi qu'une compression des ressorts hélicoïdaux 56 entre les embases 52 de ces pions 50 et la face interne du flasque 3.

Cette translation axiale des pions 50 entraine le retrait des tétons 51B des orifices 73 du pignon 7 dans lesquels ils étaient insérés préalablement, ce qui a pour conséquence de désolidariser en rotation le pignon 7 et le flasque 3.

L'ensemble d'articulation 1 se trouve alors en configuration déverrouillée dans laquelle les deux flasques 2 et 3 peuvent pivoter librement l'un par rapport à l'autre, ce qui permet notamment de faire passer très rapidement le dossier d'une position relevée à une position intermédiaire ou complètement abaissée permettant l'accès aux places arrière du véhicule ou la mise en tablette de ce dossier.

Lorsque le dossier approche de l'inclinaison voulue, il suffit à l'utilisateur de faire tourner la première molette reliée à l'organe de débrayage 4 dans le sens inverse, de sorte à ramener les bras 42 dans leurs positions initiales.

Si le positionnement angulaire des trois pions 50 ne correspond pas avec celui de trois orifices 73 du pignon 7, les extrémités libres des tétons 51B butent contre la paroi du pignon 7 de sorte que les deux flasques 2 et 3 peuvent encore pivoter librement l'un par rapport à l'autre.

Pour verrouiller en rotation ces deux flasques 2, 3, l'utilisateur doit alors poursuivre légèrement l'inclinaison du dossier jusqu'à ce que les axes des trois pions 50 viennent en correspondance avec ceux de trois orifices 73 du pignon 7.

A cet instant, les forces de rappel élastiques exercées par les ressorts 56 sur les embases 52 des pions 50, entrainent une translation axiale des pions 50 en direction du flasque 2 dont les tétons 51B s'insèrent dans ces trois orifices 73, rendant ainsi ce pignon 7 solidaire en rotation du flasque 3. L'ensemble d'articulation 1 occupe alors à nouveau sa configuration de verrouillage.

Le pignon 7 comportant neuf orifices circulaires 73 régulièrement espacés les uns des autres d'un angle de 40 degrés, l'ensemble d'articulation 1 permet donc d'effectuer des débattements angulaires rapides du dossier selon des multiples de 40 degrés.

Selon des variantes non représentées, le nombre d'orifices circulaires ménagés sur la paroi du pignon est différent de neuf et égal à un autre valeur multiple du nombre de pions. Le pignon peut ainsi comporte par exemple six ou douze orifices, de sorte à permettre des débattements angulaires rapides du dossier selon des multiples de 60 ou de 30 degrés.

Selon d'autres variantes non représentées, l'un des pions présente un téton dont la forme est différente, par exemple triangulaire, ce dernier étant prévu pour coopérer exclusivement avec des orifices de forme complémentaire ménagés dans la paroi du pignon. Cela permet ainsi de sélectionner plus précisément les débattements angulaires rapides souhaités pour dossier. Ainsi, pour un pignon comportant toujours neuf orifices régulièrement espacés les uns des autres d'un angle de 40 degrés, on peut obtenir des débattements angulaires rapides du dossier selon des multiples de 80 degrés si l'on remplace un orifice sur deux, par un orifice de forme différente.

Selon encore d'autres variantes de réalisation non représentées, certains éléments de l'ensemble d'articulation selon l'invention peuvent être conformés différemment. Tel est notamment le cas des bras de l'organe de débrayage, des pions et des orifices du pignon, dont la forme, le nombre et la disposition peuvent être modifiés.

De la même manière, l'utilisation d'autres moyens élastiques de rappels peuvent être également envisagés sans que l'on sorte du cadre de l'invention.

## Revendications

1. Ensemble d'articulation débrayable pour siège de véhicule automobile comportant :
- un premier flasque (2) comprenant une denture intérieure (23) centrée sur son axe ;
- un deuxième flasque (3) présentant un axe parallèle et légèrement distant de l'axe dudit premier flasque (2), lesdits premier et deuxième flasques (2, 3) étant prévus pour être fixés respectivement à l'assise et au dossier du siège ou vice versa ;
- un mécanisme à excentrique reliant ladite denture intérieure (23) à une denture extérieure (71) centrée sur l'axe dudit deuxième flasque (3), et comportant un nombre de dents inférieur d'au moins une dent à celui de ladite denture intérieure (23),
- un organe de commande (8) pour faire tourner ledit mécanisme à excentrique et entrainer la rotation de ladite denture extérieure (71) dans ladite denture intérieure (23) ;
ledit ensemble d'articulation étant **caractérisé en ce que** ladite denture extérieure (71) est montée sur un pignon (7), et **en ce qu'**il comporte en outre un organe de débrayage (4) actionnable en rotation et apte à entrainer des pions de verrouillage (50) en translation axiale pour faire passer ledit ensemble d'articulation d'une configuration verrouillée dans laquelle lesdits pions (50) sont introduits au moins partiellement dans des orifices (73) de formes complémentaires ménagés dans la paroi dudit pignon (7) de sorte à lier en rotation ladite denture extérieure (71) et ledit deuxième flasque (3), à une configuration déverrouillée dans laquelle lesdits pions (50) ne coopèrent pas avec lesdits orifices (73) de sorte que ladite denture extérieure (71) et ledit deuxième flasque (3) sont désolidarisés en rotation l'un par rapport à l'autre.

2. Ensemble d'articulation selon la revendication 1, **caractérisé en ce que** ledit organe de débrayage (4) comporte des rampes (42B) coopérant avec les dits pions (50) de sorte à entrainer leur translation axiale lors de la rotation dudit organe de débrayage (4).

3. Ensemble d'articulation selon la revendication 2, **caractérisé en ce que** ledit organe de débrayage (4) comporte un moyeu cylindrique central (41) et plusieurs bras en arc de cercle (42) reliés audit moyeu (41) par l'intermédiaire de pattes radiales (43) angulairement réparties de manière régulière autour dudit deuxième flasque (3), chaque dit bras (42) comportant une dite rampe (42B) coopérant avec un dit pion (50).

4. Ensemble d'articulation selon la revendication 3, **caractérisé en ce qu'**il comporte des moyens élastiques de rappel (56) sollicitant en permanence lesdits pions (50) en direction des dits bras (42).

5. Ensemble d'articulation selon l'une des revendications 3 ou 4, **caractérisé en ce que** chaque dit bras (42) présente une ouverture oblongue (44) en arc de cercle recevant un dit pion (50) respectif dont un épaulement (53) repose sur la bordure de cette ouverture (44).

6. Ensemble d'articulation selon l'une des revendications 3 à 5, **caractérisé en ce que** chaque dit bras (42) comporte une portion proximale (42A) raccordée à une dite patte respective (43), une portion distale (42C) de plus faible épaisseur, et une portion intermédiaire (42B) reliant lesdites portions proximale (42A) et distale (42C) et formant une dite rampe (42B).

7. Ensemble d'articulation selon l'une des revendications 1 à 6, **caractérisé en ce que** chaque dit pion (50) présente un alésage cylindrique axial et traversant (55), à l'intérieur duquel est montée à coulissement la tige cylindrique (35A) d'un piston de guidage respectif (35) solidaire dudit deuxième flasque (3).

8. Ensemble d'articulation selon l'une des revendications 1 à 7, **caractérisé en ce que** chaque dit pion (50) comporte un téton d'extrémité (51B) prévu pour s'introduire dans un dit orifice (73) de forme complémentaire ménagé dans la paroi dudit pignon (7).

9. Ensemble d'articulation selon la revendication 8, **caractérisé en ce que** l'un des dits pions présente un téton de forme différente prévu pour coopérer exclusivement avec certains des orifices ménagés dans la paroi dudit pignon et qui présentent une forme complémentaire à ce téton.

10. Ensemble d'articulation selon l'une des revendications 1 à 9, **caractérisé en ce que** lesdits pions (50) sont angulairement répartis de manière régulière par rapport à l'axe dudit deuxième flasque (3), le nombre d'orifices (73) étant en outre égal à un multiple du nombre de pions (50).

## Patentansprüche

1. Lösbare Scharnieranordnung für Kraftfahrzeugsitz, die Folgendes umfasst:
- einen ersten Flansch (2), der eine Innenverzahnung (23) umfasst, die auf seiner Achse zentriert ist,
- einen zweiten Flansch (3), der eine Achse parallel und leicht von der Achse des ersten Flansch (2) beabstandet aufweist, wobei der erste und der zweite Flansch (2, 3) vorgesehen sind, um jeweils an der Sitzfläche und an der Rückenlehne des Sitzes oder umgekehrt befestigt zu sein,
- einen Mechanismus mit Exzenter, der die Innenverzahnung (23) mit einer Außenverzahnung (71) verbindet, die auf der Achse des zweiten Flanschs (3) zentriert ist und eine Zahnanzahl umfasst, die um mindestens einen Zahn geringer ist als die der Innenverzahnung (23),
- ein Steuerorgan (8), um den Mechanismus mit Exzenter drehen zu lassen und die Drehung der Außenverzahnung (71) in der Innenverzahnung (23) anzutreiben,
Scharnieranordnung **dadurch gekennzeichnet, dass** die Außenverzahnung (71) auf einem Ritzel (7) montiert ist, und dass sie außerdem ein Ausrückorgan (4) umfasst, das in Drehung betätigbar und geeignet ist, um Verriegelungsstifte (50) in axialer Verschiebung anzutreiben, um die Scharnieranordnung von einer verriegelten Konfiguration, in der die Stifte (50) mindestens teilweise in Öffnungen (73) mit komplementären Formen eingefügt sind, die in der Wand des Ritzels (7) derart eingerichtet sind, dass die Außenverzahnung (71) und der zweite Flansch (3) in Drehung verbunden sind, auf eine entriegelte Konfiguration übergehen zu lassen, in der die Stifte (50) nicht mit den Öffnungen (73) zusammenzuwirken, so dass die Außenverzahnung (71) und der zweite Flansch (3) in Drehung voneinander getrennt sind.

2. Scharnieranordnung nach Anspruch 1, **dadurch gekennzeichnet, dass** das Ausrückorgan (4) Rampen (42B) umfasst, die mit den Stiften (50) derart zusammenwirken, dass sie ihre axiale Verschiebung bei der Drehung des Ausrückorgans (4) antreiben.

3. Scharnieranordnung nach Anspruch 2, **dadurch gekennzeichnet, dass** das Ausrückorgan (4) eine zentrale zylindrische Nabe (41) und mehrere Kreisbogenarme (42), die mit der Nabe (41) über radiale Pratzen (43), die winkelig regelmäßig um den zweiten Flansch (3) verteilt sind, verbunden sind, umfasst, wobei jeder Arm (42) eine Rampe (42B) umfasst, die mit einem Stift (50) zusammenwirkt.

4. Scharnieranordnung nach Anspruch 3, **dadurch gekennzeichnet, dass** sie elastische Rückstellmittel (56) umfasst, die die Stifte (50) ständig in Richtung der Arme (42) belasten.

5. Scharnieranordnung nach einem der Ansprüche 3 oder 4, **dadurch gekennzeichnet, dass** jeder Arm (42) eine längliche Öffnung (44) im Kreisbogen aufweist, die einen jeweiligen Stift (50) aufnimmt, von dem ein Ansatz (51) auf dem Rand dieser Öffnung (44) ruht.

6. Scharnieranordnung nach einem der Ansprüche 3 bis 5, **dadurch gekennzeichnet, dass** jeder Arm (42) einen proximalen Abschnitt (42A) umfasst, der an eine jeweilige Pratze (43) angeschlossen ist, einen distalen Abschnitt (42C) mit geringerer Stärke, und einen Zwischenabschnitt (42B), der den proximalen Abschnitt (42A) und den distalen Abschnitt (42C) verbindet und eine Rampe (42B) bildet.

7. Scharnieranordnung nach einem der Ansprüche 1 bis 6, **dadurch gekennzeichnet, dass** jeder Stift (50) eine axiale zylindrische und durchgehende Bohrung (55) aufweist, in deren Innerem gleitend der zylindrische Schaft (35A) eines jeweiligen Führungskolbens (35), der fest mit dem zweiten Flansch (3) verbunden ist, montiert ist.

8. Scharnieranordnung nach einem der Ansprüche 1 bis 7, **dadurch gekennzeichnet, dass** jeder Stift (50) einen Endzapfen (51B) umfasst, der vorgesehen ist, um sich in eine Öffnung (73) mit komplementärer Form, die in der Wand des Ritzels (7) eingerichtet ist, zu fügen.

9. Scharnieranordnung nach Anspruch 8, **dadurch gekennzeichnet, dass** einer der Stifter einen Zapfen mit unterschiedlicher Form aufweist, der vorgesehen ist, um ausschließlich mit bestimmten der Öffnungen zusammenzuwirken, die in der Wand des Ritzels eingerichtet sind, und die eine komplementäre Form zu diesem Zapfen aufweisen.

10. Scharnieranordnung nach einem der Ansprüche 1 bis 9, **dadurch gekennzeichnet, dass** die Stifte (50) winkelig regelmäßig in Bezug zu der Achse des zweiten Flansch (3) verteilt sind, wobei die Anzahl von Öffnungen (73) außerdem gleich einem Vielfachen der Anzahl von Stiften (50) ist.

## Claims

1. A releasable hinge assembly for a motor vehicle seat comprising:
- a first flange (2) including an inner toothing (23) centred on its axis;
- a second flange (3) having an axis parallel to and slightly separated from said first flange (2), said first and second flanges (2, 3) being provided so as to be fixed respectively to the seat pan and to the back of the seat or vice versa;
- an eccentric mechanism linking said inner toothing (23) to an outer toothing (71) centred on the axis of said second flange (3), and comprising a number of teeth fewer by at least one tooth than that of said inner toothing (23),
- a control member (8) for rotating said eccentric mechanism and driving the rotation of said outer toothing (71) in said inner toothing (23);
said hinge assembly being **characterized in that** said outer toothing (71) is mounted on a pinion (7), and **in that** it comprises furthermore a release member (4) able to be actuated in rotation and able to drive locking pins (50) in axial translation in order to shift said hinge assembly from a locked configuration in which said pins (50) are introduced at least partially in orifices (73) having complementary shapes arranged in the wall of said pinion (7) so as to link in rotation said outer toothing (71) and said second flange (3), to an unlocked configuration in which said pins (50) do not cooperate with said orifices (73) such that said outer toothing (71) and said second flange (3) are rotationally uncoupled from each other.

2. The hinge assembly according to Claim 1, **characterized in that** said release member (4) comprises ramps (42B) cooperating with said pins (50) so as to drive their axial translation during the rotation of said release member (4).

3. The hinge assembly according to Claim 2, **characterized in that** said release member (4) comprises a cylindrical central hub (41) and a plurality of arms (42) in the shape of an arc of a circle, connected to said hub (41) by means of radial lugs (43) angularly distributed in a regular manner around said second flange (3), each said arm (42) comprising a said ramp (42B) cooperating with a said pin (50).

4. The hinge assembly according to Claim 3, **characterized in that** it comprises elastic return means (56) permanently stressing said pins (50) in the direction of said arms (42).

5. The hinge assembly according to one of Claims 3 or 4, **characterized in that** each said arm (42) has an oblong opening (44) in the shape of an arc of a circle, receiving a said respective pin (50), a shoulder (53) of which rests on the edge of this opening (44).

6. The hinge assembly according to one of Claims 3 to 5, **characterized in that** each said arm (42) comprises a proximal portion (42A) connected to a said respective lug (43), a distal portion (42C) of smaller thickness, and an intermediate portion (42B) connecting said proximal (42A) and distal (42C) portions and forming a said ramp (42B).

7. The hinge assembly according to one of Claims 1 to 6, **characterized in that** each said pin (50) has a cylindrical axial and feed-through bore (55), in the interior of which there is slidingly mounted the cylindrical rod (35A) of a respective guiding piston (35) integral with said second flange (3).

8. The hinge assembly according to one of Claims 1 to 7, **characterized in that** each said pin (50) comprises an end stud (51B) provided to be introduced into a said orifice (73) of complementary shape arranged in the wall of said pinion (7).

9. The hinge assembly according to Claim 8, **characterized in that** one of said pins presents a stud of different shape, provided to cooperate exclusively with certain of the orifices arranged in the wall of said pinion and which have a complementary shape to this stud.

10. The hinge assembly according to one of Claims 1 to 9, **characterized in that** said pins (50) are angularly distributed in a regular manner with respect to the axis of said second flange (3), the number of orifices (73) being, furthermore, equal to a multiple of the number of pins (50).
